# FASCICULE DE BREVET EUROPEEN

(11) **EP 2 340 570 B1**
(45) Date de publication et mention de la délivrance du brevet: **23.01.2013**
(21) Numéro de dépôt: 09741337.1
(22) Date de dépôt: 23.09.2009
(51) Int. Cl.: H01L 37/04, F25B 21/04

(54) **ELEMENT MAGNETOCALORIQUE**
MAGNETOKALORISCHES ELEMENT
MAGNETOCALORIC ELEMENT

(30) Priorité: 25.09.2008 FR 0805280
(43) Date de publication de la demande: 06.07.2011
(73) Titulaire: Cooltech Applications S.A.S., 67810 Holtzheim (FR)
(72) Inventeur: HEITZLER, Jean-Claude, 68180 Horbourg-Wihr (FR); MULLER, Christian, 67000 Strasbourg (FR); HAMM, Jean-Luc, 67380 Lingolsheim (FR)
(74) Mandataire: Nithardt, Roland
(86) Numéro de dépôt international: PCT/FR2009/001128
(87) Numéro de publication internationale: WO 2010/034907

(56) Documents cités:
- US-A1- 2002 124 561
- US-A1- 2007 186 560

## Description

### Domaine technique :

La présente invention concerne un élément magnétocalorique constitué par un alignement d'au moins deux ensembles adjacents de matériaux magnétocaloriques comportant une température de Curie différente, lesdits matériaux magnétocaloriques au sein d'un même ensemble présentant la même température de Curie, et lesdits ensembles adjacents étant disposés selon une température de Curie croissante. Un tel ensemble est de préférence destiné à être intégré dans un générateur thermique.

### Technique antérieure :

La technologie du froid magnétique à température ambiante est connue depuis plus d'une vingtaine d'années et on sait les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'un tel générateur, en jouant sur les différents paramètres, tels que la puissance d'aimantation, les performances de l'élément magnétocalorique, la surface d'échange entre le fluide caloporteur et les éléments magnétocaloriques, les performances des échangeurs de chaleur, etc.

Le choix des matériaux magnétocaloriques est déterminant et influence directement les performances d'un générateur thermique magnétocalorique. L'effet magnétocalorique culmine au voisinage de la température de Curie des matériaux magnétocaloriques dans leur zone de transition de phase. Or, les matériaux sont soit à transition de phase de premier ordre et présentent une grande efficacité magnétocalorique limitée sur un intervalle de température restreint autour de la température de Curie, soit à transition de phase de second ordre et présentent une efficacité plus faible, mais sur un intervalle de température plus large. Or, une difficulté particulière consiste à réaliser un générateur magnétocalorique pouvant fonctionner avec une efficacité élevée dans une large gamme de températures de manière à adapter les niveaux de température du générateur avec les températures externes.

De nombreux générateurs thermiques magnétocaloriques exploitent l'effet magnétocalorique de matériaux magnétocaloriques en faisant circuler un fluide caloporteur le long ou à travers desdits matériaux magnétocaloriques, dans deux sens opposés, en fonction des cycles d'aimantation et de désaimantation desdits matériaux magnétocaloriques. Le fluide utilisé est également destiné à échanger thermiquement ses calories et/ou frigories avec un circuit extérieur. Lors du démarrage d'un générateur thermique à matériau magnétocalorique, la circulation du fluide permet d'obtenir un gradient de température entre les extrémités opposées du matériau magnétocalorique. L'obtention de ce gradient de température dépend de la température initiale et du débit du fluide caloporteur, de l'intensité de l'effet magnétocalorique de la température de Curie et de la longueur du matériau magnétocalorique. Plus la température initiale et la température de Curie du matériau magnétocalorique sont proches, plus vite sera atteint un gradient de température à partir duquel le générateur est fonctionnel et peut produire ou échanger de l'énergie thermique avec un circuit extérieur. Or, la température initiale du fluide caloporteur n'est pas contrôlée et est égale à la température extérieure au générateur, et peut donc s'inscrire dans une gamme très large de températures, par exemple entre - 20 et + 60°C. Dans ces conditions, les matériaux magnétocaloriques doivent être choisis en fonction de leur température de Curie et de l'environnement dans lequel le générateur sera intégré ou fonctionnera. Pour augmenter le rendement, cela implique de réaliser, pour une application donnée, un générateur pour chaque type d'environnement.

Une solution pour limiter le nombre de générateurs spécifiques à prévoir consiste à utiliser des matériaux magnétocaloriques dont la zone de transition est large, à savoir des matériaux à transition de phase de second ordre. Or, l'effet magnétocalorique de ces matériaux est faible, ce qui limite l'intérêt de cette solution car elle ne permet pas d'obtenir un rendement acceptable du générateur.

Une autre proposition consiste à intégrer dans le générateur plusieurs matériaux magnétocaloriques à transition de phase de premier ordre. Toutefois cette solution présente des inconvénients liés à la faible zone de transition de ces matériaux car l'effet magnétocalorique de certains de ces matériaux peut ne pas se produire si la température du fluide caloporteur n'atteint jamais la zone de transition de ces derniers. De plus, le temps d'atteinte d'un gradient de température entre les extrémités chaude et froide de l'élément magnétocalorique peut être long du fait de la multiplicité des matériaux utilisés.

Certaines applications, comme par exemple celle décrite dans la publication US 2002/0124561 Al relative à un moteur Sterling, prévoient de combiner différents matériaux magnétocaloriques ayant des températures de Curie différentes et de les disposer selon une température de Curie croissante pour augmenter la différence de température entre les extrémités chaude et froide d'un générateur magnétocalorique.

### Exposé de l'invention :

La présente invention vise à pallier ces inconvénients en proposant un ensemble magnétocalorique permettant de générer un flux thermique et susceptible d'être intégré dans un générateur thermique pouvant fonctionner dans tout type d'environnement en terme de température, dans lequel le temps d'atteinte du niveau fonctionnel du générateur, c'est-à-dire l'obtention d'un gradient de température déterminé entre les extrémités opposées du ou des éléments magnétocaloriques du générateur est réduit et, enfin, fournissant un rendement convenable en vue d'une application telle que le chauffage, la climatisation, le tempérage, le refroidissement, par exemple.

Dans ce but, l'invention concerne un élément magnétocalorique du genre indiqué en préambule, caractérisé en ce qu'il comporte des moyens d'amorçage d'un gradient de température entre les deux extrémités opposées chaude et froide dudit élément magnétocalorique et en ce que lesdits moyens d'amorçage sont constitués par des matériaux magnétocaloriques présentant une zone de transition plus importante que celle des matériaux magnétocaloriques formant lesdits ensembles.

Les moyens d'amorçage ont pour but d'accélérer la mise en place du gradient de température entre les deux extrémités opposées de l'élément magnétocalorique afin d'atteindre rapidement un régime établi, ces extrémités opposées étant constituées par les ensembles extrémaux dudit élément magnétocalorique.

Le terme ensemble désigne aussi bien une suite d'éléments assemblés les uns aux autres qu'une structure d'un seul tenant, chacune susceptible d'être traversée par du fluide caloporteur.

En outre, les matériaux magnétocaloriques constituant les ensembles peuvent être à transition de phase de premier ordre et les matériaux magnétocaloriques formant les moyens d'amorçage peuvent être à transition de phase de second ordre.

Dans un premier mode de réalisation de l'invention, chaque ensemble peut être constitué par une superposition de plaquettes en matériau magnétocalorique espacées les unes des autres pour autoriser le passage du fluide caloporteur à travers ledit ensemble.

Les matériaux magnétocaloriques formant les moyens d'amorçage peuvent alors se présenter sous la forme d'au moins une plaque intégrée transversalement dans et/ou le long d'au moins un ensemble en matériau magnétocalorique et dont la zone de transition couvre la température de Curie du ou desdits ensembles.

En variante, au moins un ensemble peut comprendre des moyens d'amorçage sous la forme d'au moins deux plaques en matériau magnétocalorique alignées et intégrées transversalement dans et/ou le long dudit ensemble et la zone de transition de l'assemblage formé par lesdites plaques peut couvrir la température de Curie dudit ensemble.

Selon une autre variante, les matériaux magnétocaloriques formant les moyens d'amorçage peuvent être sous la forme d'au moins une plaque intégrée transversalement dans et/ou le long de deux ensembles en matériau magnétocalorique et constituée par le même matériau magnétocalorique que celui de l'un desdits deux ensembles.

Selon encore une autre variante, permettant d'amorcer les moyens d'amorçage entre eux, les matériaux magnétocaloriques formant les moyens d'amorçage peuvent être sous la forme d'au moins deux plaques parallèles, intégrée chacune transversalement dans et/ou le long d'au moins deux ensembles de telle manière que lesdites plaques sont adjacentes entre elles dans au moins un desdits ensembles et la zone de transition de chaque plaque peut couvrir la température de Curie des ensembles dans lesquels elle est intégrée.

Dans un second mode de réalisation de l'invention, chaque ensemble peut être constitué par une pièce poreuse en matériau magnétocalorique.

Dans cette configuration, les matériaux magnétocaloriques formant les moyens d'amorçage peuvent être sous la forme d'au moins une barrette intégrée sensiblement transversalement dans au moins un ensemble en matériau magnétocalorique.

L'invention concerne également un générateur thermique magnétocalorique comportant au moins un élément magnétocalorique, au moins un arrangement magnétique agencé pour soumettre ledit élément magnétocalorique à une variation de champ magnétique et créer alternativement, dans ce dernier, un cycle d'échauffement et un cycle de refroidissement et un fluide caloporteur déplacé de manière alternée à travers ledit élément magnétocalorique dans une direction sensiblement perpendiculairement aux ensemble et en synchronisation avec la variation du champ magnétique, de manière à mettre en place puis à maintenir un gradient de température entre les extrémités opposées chaude et froide dudit élément magnétocalorique, ce générateur étant caractérisé en ce que ledit élément magnétocalorique est réalisé conformément à la définition ci-dessus.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels:
   - les figures 1 à 6 sont des vues en plan d'un élément magnétocalorique selon six variantes d'un premier mode de réalisation de l'invention,
   - la figure 7A est une vue en perspective d'un élément magnétocalorique selon un deuxième mode de réalisation de l'invention,
   - la figure 7B est une vue en coupe partielle de la figure 7A,
   - la figure 8 est une représentation graphique des courbes de température des extrémités chaude et froide de l'élément magnétocalorique représenté à la figure 4,
   - les figures 9 et 10 sont des vues en plan d'un élément magnétocalorique selon deux variantes supplémentaires du premier mode de réalisation, et
   - la figure 11 est une vue en plan d'un élément magnétocalorique selon un troisième mode de réalisation de l'invention.

### Illustrations de l'invention :

Dans les exemples de réalisation illustrés, les pièces ou parties identiques portent les mêmes références numériques.

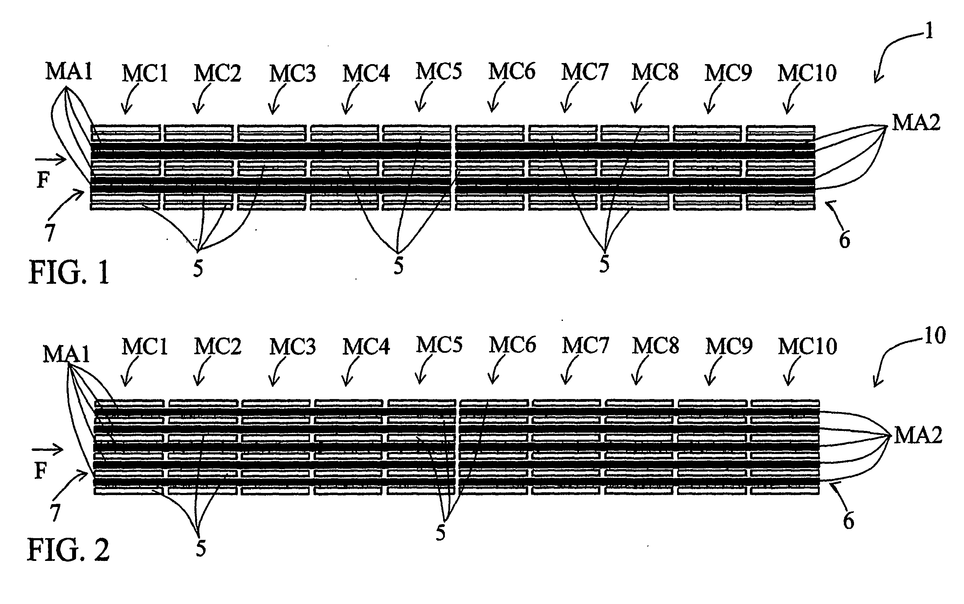

En référence à la figure 1, l'élément magnétocalorique 1 représenté selon une première variante d'un premier mode de réalisation de l'invention est destiné à être intégré dans un générateur thermique magnétocalorique. Il est constitué par dix ensembles MC1-10 de plaquettes 5 en matériau magnétocalorique. Dans ce premier mode de réalisation, chaque ensemble MC1-10 réalisé dans des matériaux magnétocaloriques différents est constitué par un assemblage de plaquettes 5 identiques.

Dans chaque ensemble MC1-10, ces plaquettes 5 sont espacées les unes des autres pour permettre au fluide caloporteur de circuler entre deux plaquettes 5 adjacentes et d'échanger de l'énergie thermique avec ces dernières. A cet effet, un dispositif d'espacement ou de séparation (non représenté), garantissant un espace pour le passage du fluide caloporteur, peut séparer les plaquettes 5 deux à deux. La direction de circulation du fluide est représentée par la flèche F sur la figure 1.

Les ensembles MC1-10 sont disposés selon une température de Curie croissante.

Les éléments magnétocaloriques 1, 10, 20 et 30 représentés respectivement aux figures 1 à 4, sont constitués par les mêmes ensembles MC1 à MC10 de matériaux magnétocaloriques. A titre d'exemple, la température de Curie des matériaux MC1 est de - 18,5°C, celle des matériaux MC2 de - 9,1°C, celle des matériaux MC3 de 1,2°C, celle des matériaux MC4 de 14,1°C et celle des matériaux MC5 de 29,5°C. L'utilisation de matériaux magnétocaloriques comportant des températures de Curie variées permet d'augmenter les possibilités d'applications du générateur thermique dans lequel est intégré l'élément magnétocalorique selon l'invention, ce dernier pouvant alors fonctionner dans une large plage de températures et avoir une puissance thermique élevée.

Quand l'élément magnétocalorique 1, 10, 20, 30, 40, 50, 60, 70, 80, 90 selon l'invention est intégré dans un générateur thermique (non représenté), un arrangement magnétique est agencé pour soumettre les ensembles MC1-21 et MAl-34 à une variation de champ magnétique et créer alternativement dans ces derniers un cycle d'échauffement et un cycle de refroidissement. Le fluide caloporteur est déplacé de manière synchronisée avec ces cycles, et de manière alternée selon un mouvement de va-et-vient, pour mettre en place puis maintenir un gradient de température entre les deux extrémités opposées chaude 6 et froide 7 de l'élément magnétocalorique 1, 10, 20, 30, 40, 50, 60, 70, 80, 90.

Un générateur thermique intégrant un tel élément magnétocalorique 1, 10, 20, 30, 40, 50, 60, 70, 80, 90 est destiné à restituer l'énergie thermique produite par ledit élément magnétocalorique 1, 10, 20, 30, 40, 50, 60, 70, 80, 90, et plus particulièrement par les matériaux magnétocaloriques qu'il renferme, ce, à un ou plusieurs circuits extérieurs. Cette restitution est réalisée par un échange thermique avec le fluide caloporteur. Lorsque le gradient de température est atteint, l'élément magnétocalorique 1, 10, 20, 30, 40, 50, 60, 70, 80, 90 est dans un régime établi. Ceci implique que plus rapidement ce gradient est atteint, plus rapidement le générateur thermique est opérationnel.

Pour diminuer le temps d'obtention de ce gradient de température, l'élément magnétocalorique 1 représenté à la figure 1 intègre des moyens d'amorçage réalisés sous la forme de huit plaques MA1 et MA2 associées deux à deux et intercalées dans cinq ensembles MC1 à MC5 et MC6 à MC10 en formant des lignes, deux paires de plaques MA1 ou MA2 étant séparées entre elles par deux lignes de plaquettes 5 formant les ensembles MC1 à MC5, respectivement MC6 à MC10. Le matériau formant les plaques MA1 intégrées dans les cinq ensembles MC1 à MC5 présente une zone de transition plus importante que celle des matériaux constituant lesdits ensembles et qui couvre l'ensemble des températures de Curie desdits matériaux. Le matériau MA1 est en effet sélectionné pour sa température de Curie de 5,5°C et sa zone ou plage de transition de 60°C, il s'agit d'un matériau à transition de phase de second ordre. A l'inverse, les matériaux des ensembles MC1 à MC5 sont des matériaux à transition de phase de premier ordre qui présentent un effet magnétocalorique plus important, mais ce, uniquement autour de leur température de Curie (plage d'environ 12°C).

Ainsi, dans les cinq premiers ensembles MC1 à MC5 de l'élément magnétocalorique 1, le matériau formant les plaques MA1 sera actif dans un intervalle de températures compris entre - 25°C et +35°C. La température du fluide caloporteur au démarrage doit donc simplement s'inscrire dans cet intervalle, qui est très large. Le déplacement du fluide caloporteur à travers ces ensembles MC1 à MC5 et la variation du champ magnétique permettra de créer un gradient de température entre les extrémités des plaques d'amorçage MA1 qui, par conduction et convection thermique, permettra d'atteindre très rapidement la température de Curie de chaque matériau constituant les ensembles MC1 à MC5 pour exploiter les capacités magnétocaloriques de ces derniers.

De même, les matériaux magnétocaloriques des cinq ensembles suivants MC6 à MC10 comportent également une température de Curie croissante et sont à transition de phase de premier ordre. Les plaques MA2 formant les moyens d'amorçage de ces cinq ensembles MC6 à MC10 sont en un matériau magnétocalorique comportant une zone de transition couvrant les températures de Curie des matériaux des ensembles MC6 à MC10, ce qui permet d'atteindre plus rapidement un gradient de température permettant au générateur d'être fonctionnel ou en régime établi.

Ainsi, la juxtaposition de plusieurs ensembles de matériaux magnétocaloriques comportant une température de Curie croissante permet de réaliser un gradient de température élevé entre les extrémités d'un même élément magnétocalorique et donc d'obtenir un rendement important. L'intégration de moyens d'amorçage de ce gradient de température permet d'arriver plus rapidement à un régime établi. Un générateur thermique intégrant un élément magnétocalorique 1 selon l'invention présente donc très rapidement un rendement élevé.

La figure 2 représente une seconde variante de réalisation de l'invention dans laquelle l'élément magnétocalorique 10 est constitué par dix ensembles MC1 à MC10 de plaquettes 5 réalisées dans les mêmes matériaux que pour l'élément magnétocalorique 1 décrit précédemment, du type à transition de premier ordre et comportant une température de Curie croissante.

Dans cet élément magnétocalorique 10, les moyens d'amorçage sont également sous la forme de plaques MA1 et MA2. Les plaques MA1 forment une ligne intégrée dans cinq ensembles MC1 à MC5 et les plaques MA2 forment une ligne intégrée dans cinq ensembles MC6 à MC10 de l'élément magnétocalorique 10. Ces plaques MA1 et MA2 sont placées en alternance avec des lignes de matériau formant l'élément magnétocalorique 10, c'est-à-dire séparées entre elles par une ligne de matériau formant les ensembles MC1 à MC10.

Les moyens d'amorçage sont réalisés dans les mêmes matériaux que ceux de l'élément magnétocalorique 1 représenté à la figure 1, étant donné qu'ils sont associés aux mêmes ensembles MC1 à MC10 réalisés dans les mêmes matériaux.

Les mêmes avantages que ceux décrits en regard de l'élément magnétocalorique 1 s'appliquent à cet élément magnétocalorique 10 : pendant la phase de démarrage de l'élément magnétocalorique 10, les matériaux des ensembles MC1 à MC10 pour lesquels la température du fluide caloporteur se trouve dans la zone de transition de ces derniers et les plaques d'amorçage MA1 et MA2 sont soumis à des cycles d'échauffement et de refroidissement, lesdites plaques d'amorçage MA1 et MA2 générant un gradient de température entre leurs deux extrémités qui permet d'activer plus rapidement, grâce à la conduction et à la convection thermique, les matériaux des ensembles MC1 à MC10 pour lesquels le fluide caloporteur ne présente pas, au démarrage, une température située dans leur zone de transition.

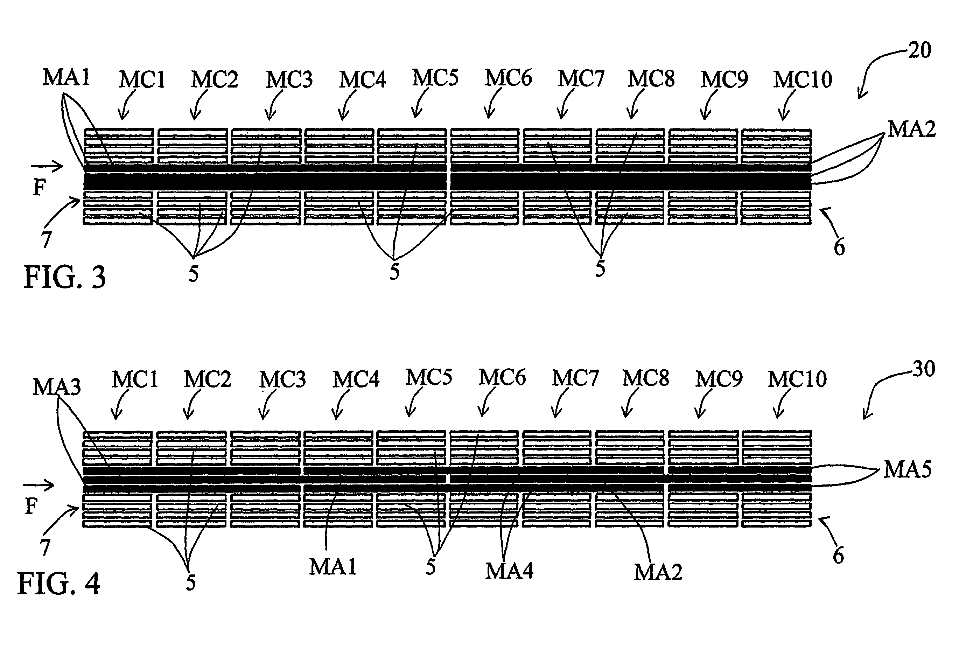

La figure 3 représente une troisième variante de réalisation de l'invention dans laquelle l'élément magnétocalorique 20 est constitué par dix ensembles MC1 à MC10 de plaquettes 5 réalisées dans les mêmes matériaux que ceux utilisés pour l'élément magnétocalorique 1, du type à transition de premier ordre et comportant une température de Curie croissante.

Dans cet élément magnétocalorique 20, les moyens d'amorçage sont sous la forme de deux ensembles constitués par trois plaquettes MA1 et MA2 intégrés dans ledit élément magnétocalorique 20.

A nouveau, ces moyens d'amorçage MA1 et MA2 sont réalisés dans les mêmes matériaux que ceux de l'élément magnétocalorique 1 représenté à la figure 1, étant donné qu'ils sont associés aux mêmes ensembles MC1 à MC10 réalisés dans les mêmes matériaux.

Les mêmes avantages que ceux décrits précédemment s'appliquent à cet élément magnétocalorique 20. Le premier ensemble de plaques MA1 en matériau magnétocalorique permet de réaliser l'amorçage des ensembles MC1 à MC5 de l'élément magnétocalorique 20 et le second ensemble de plaques MA2 en matériau magnétocalorique permet de réaliser l'amorçage des ensembles MC6 à MC10.

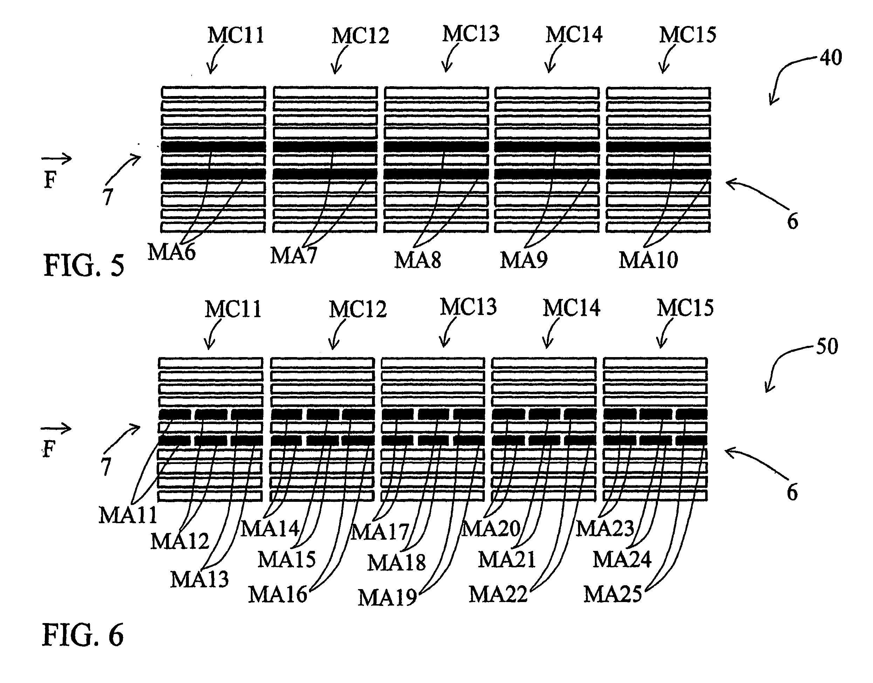

En référence à la figure 5, l'élément magnétocalorique 40 représenté selon une cinquième variante du premier mode de réalisation de l'invention est constitué par cinq ensembles MC11-15 de plaquettes 5 en matériau magnétocalorique disposés selon une température de Curie croissante. Dans cette réalisation, le fluide caloporteur circule dans l'espace disponible entre les différentes plaquettes 5 afin de réaliser un échange thermique avec ces dernières. L'amorçage du gradient de température dans cet élément magnétocalorique 40 est réalisé par des plaques MA6 à MA10 disposées respectivement dans les ensembles MC11 à MC15 et présentant la même largeur que les plaquettes 5. De cette manière, chaque ensemble MC11 à MC15 comporte un moyen d'amorçage spécifique. Dans cet exemple de réalisation, deux plaques MA6-MA10 sont à chaque fois intégrées dans chaque ensemble MC11 à MC15. Il peut, bien entendu, être prévu d'en intégrer plus ou une seule.

Les plaques MA6 à MA10 formant les moyens d'amorçage comportent chacune une zone de transition couvrant la température de Curie du matériau de l'ensemble dans lequel ils sont intégrés, ce qui permet d'atteindre plus rapidement un gradient de température permettant au générateur d'être fonctionnel ou en régime établi.

L'élément magnétocalorique 50 représenté à la figure 6, réalisé selon une sixième variante est constitué par les mêmes ensembles MC11 à MC15 de matériaux magnétocaloriques que ceux de l'élément magnétocalorique 40 décrit précédemment. Dans cet élément magnétocalorique 50, les moyens d'amorçage sont réalisés par trois plaques MA11 à MA25 intégrées à chaque fois dans une rangée de plaquettes 5 formant un ensemble MC11-15. Dans cette réalisation, l'ensemble des la zone de transition des trois plaques associées MA11 à MA25 couvre la température de Curie de l'ensemble dans lequel elles sont intégrées. A nouveau, il est possible d'intégrer ces plaques MA11 à MA25 dans une ou plusieurs lignes de plaquettes 5 des ensembles MC11 à MC15. Dans cet exemple, deux lignes de plaques d'amorçage MA11 à MA25 sont intégrées dans chaque ensemble MC11 à MC15.

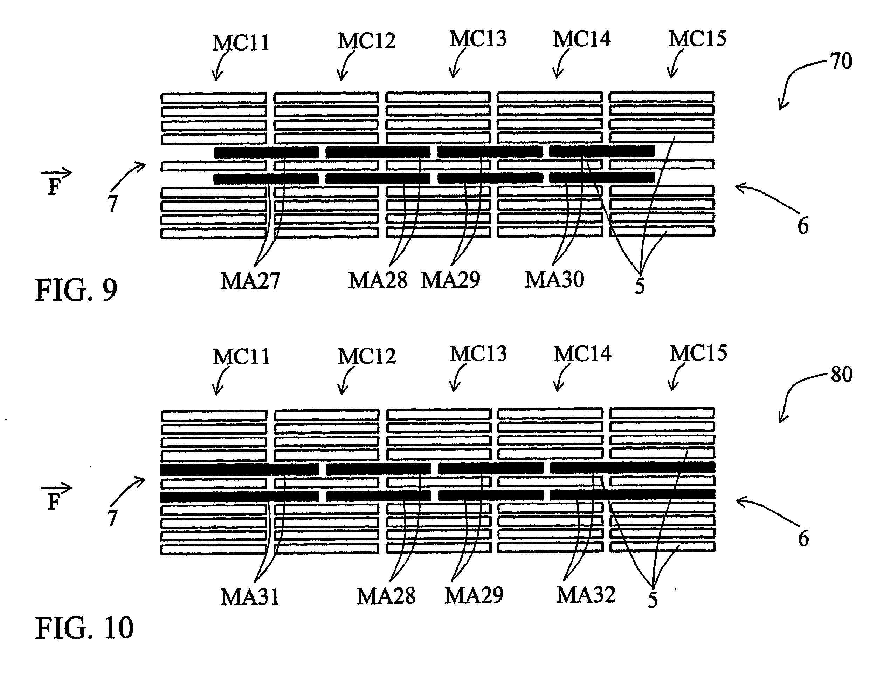

En référence à la figure 9, l'élément magnétocalorique 70 représenté selon une septième variante du premier mode de réalisation de l'invention est également constitué par les mêmes ensembles MC11 à MC15 de matériaux magnétocaloriques que ceux de l'élément magnétocalorique 40 décrit en relation avec la figure 5. Dans cette réalisation, l'amorçage du gradient de température est réalisé par des plaques MA27 à MA30 disposées chacune le long de deux ensembles, respectivement le long des ensembles MC11 et MC12, MC12 et MC13, MC13 et MC14 et MC14 et MC15. Chacune de ces plaques présente une largeur identique à celle des plaquettes 5 et est réalisée dans même matériau magnétocalorique que celui composant l'un des deux ensembles dans lesquelles elles sont disposées. Ainsi, dans cet exemple, la plaque MA27 est réalisée dans le matériau constituant l'ensemble MC11, la plaque MA28 est réalisée dans le matériau constituant l'ensemble MC12, la plaque MA29 est réalisée dans le matériau constituant l'ensemble MC13 et la plaque MA30 est réalisée dans le matériau constituant l'ensemble MC14. De cette manière, chaque paire d'ensembles comporte un moyen d'amorçage commun permettant d'aboutir plus rapidement à un gradient de température entre les deux extrémités 6 et 7 de l'élément magnétocalorique 70. Dans cet exemple de réalisation également, deux plaques MA27-MA30 sont à chaque fois intégrées dans chaque ensemble MC11 à MC15. Il peut, bien entendu, être prévu d'en intégrer plus ou une seule.

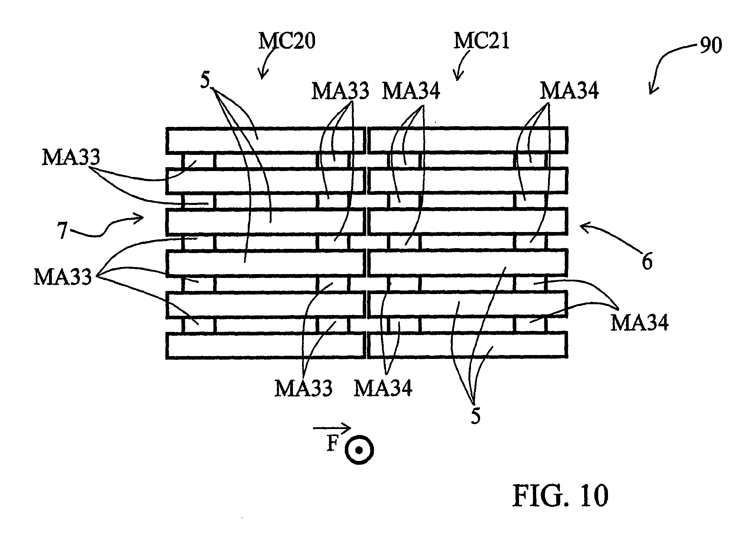

La figure 10 représente une configuration d'élément magnétocalorique 80 se distinguant de celle de la figure précédente par le fait que la largeur des plaques d'extrémité MA31 et MA32 est plus importante de sorte que lesdites plaques MA31 et MA32 s'étendent chacune jusqu'à une extrémité froide 7 ou chaude 6 dudit élément magnétocalorique 80. Cette configuration permet notamment de faire circuler le fluide caloporteur selon un débit homogène à travers l'élément magnétocalorique 80.

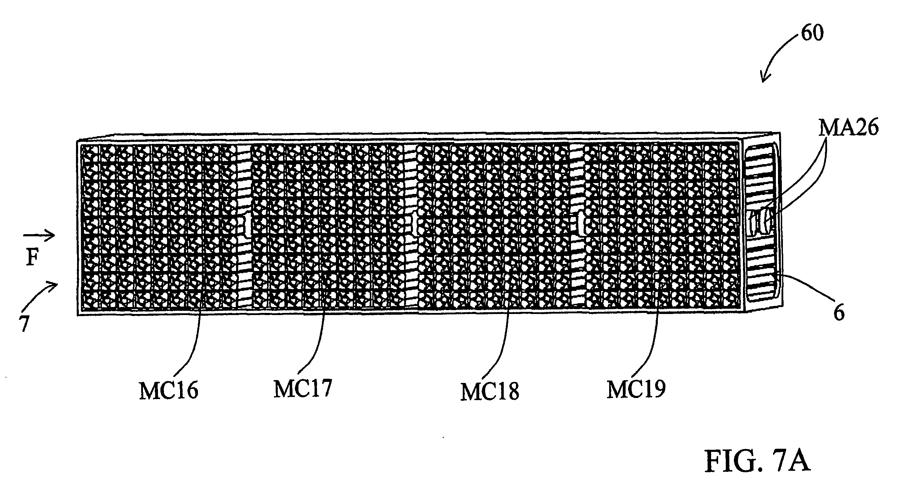

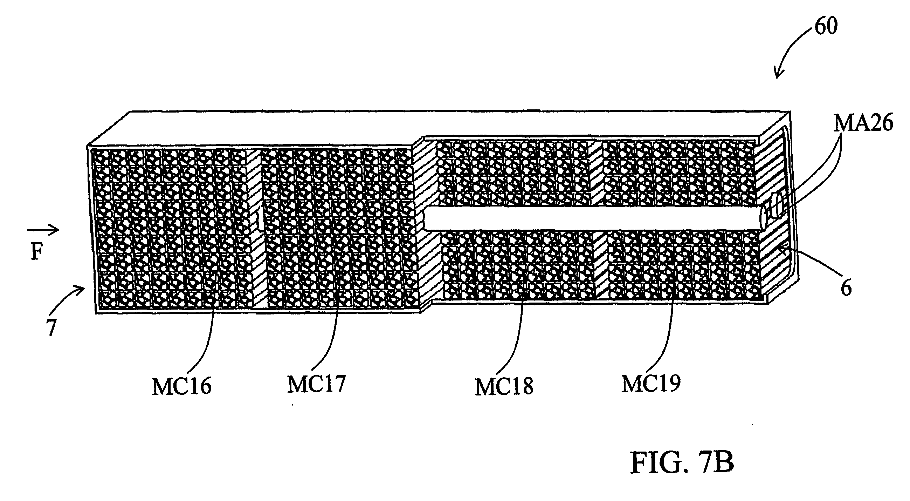

Les figures 7A et 7B représentent un élément magnétocalorique 60 selon un deuxième mode de réalisation de l'invention dans lequel les ensembles MC16 à MC19 sont constitués chacun par un bloc poreux de matériau magnétocalorique pouvant être traversé par un fluide caloporteur. Ces blocs poreux MC16-19 sont traversés par des barrettes MA26 en matériau magnétocalorique dont la zone de transition de phase couvre les températures de Curie desdits blocs poreux. Le principe d'amorçage est identique à celui décrit dans le premier mode de réalisation, les barrettes MA26 permettant d'obtenir au sein de chaque bloc poreux MC16-19 une température inscrite dans leur zone de transition, de telle manière que ces blocs réalisent, sous l'effet du champ magnétique variable, une alternance de cycles chauds et froids. La durée de la phase de démarrage de l'élément magnétocalorique 60 est donc réduite. Dans la réalisation représentée, deux barrettes MA26 sont intégrées, dont la zone de transition couvre la température de Curie des ensembles MC16 à MC19. Il peut, bien entendu, être prévu d'intégrer plus ou moins de barrettes, et ce, à travers un ou plusieurs blocs poreux.

### Meilleure manière de réaliser l'invention:

L'élément magnétocalorique 30 représenté à la figure 4 est réalisé selon le premier mode et est constitué par dix ensembles MC1 à MC10 de plaquettes 5 réalisées en matériaux magnétocaloriques identiques à ceux des éléments magnétocaloriques 1, 10 et 30, de premier ordre et comportant des températures de Curie croissantes. Les moyens d'amorçage sont également réalisés sous la forme de plaques MA1 à MA5 en matériaux magnétocaloriques à transition de phase de second ordre. Ces plaques MA1 à MA5 sont disposées dans l'élément magnétocalorique 30 de manière à former trois lignes centrales. Elles sont réalisées en cinq matériaux différents destinés à coopérer thermiquement avec les différents matériaux constituant les ensembles MC1 à MC10.

Ainsi, lorsque l'on considère les trois lignes formées par ces plaques MA1 à MA5, les deux lignes situées de part et d'autre de la ligne centrale sont identiques. Elles sont constituées par une première plaque MA3 intégrée dans les ensembles MC1, MC2 et MC3 et réalisée en un matériau dont la zone de transition couvre les températures de Curie des matériaux constituant lesdits ensembles, une seconde plaque MA4 intégrée dans les ensembles MC4 à MC8 et réalisée en un matériau dont la zone de transition couvre les températures de Curie des matériaux constituant lesdits ensembles et enfin par une troisième plaque MA5 intégrée dans les ensembles MC9 et MC10 et également réalisée en un matériau dont la zone de transition couvre les températures de Curie des matériaux constituant lesdits ensembles. La ligne centrale est constituée par une première plaque MA1 intégrée dans les ensembles MC1 à MC5 et réalisée en un matériau dont la zone de transition couvre les températures de Curie des matériaux constituant lesdits ensembles et une seconde plaque MA2 intégrée dans les ensembles MC6 à MC10. Les matériaux constituant les plaquettes 5 des ensembles MC1 à MC10 étant les mêmes que ceux des exemples de réalisation précédents, les deux plaquettes MA1 et MA2 peuvent être constituées par les mêmes matériaux que ceux constituant les plaquettes MA1 et MA2 précédents.

Dans l'élément magnétocalorique 30 représenté dans la figure 4, l'efficacité des moyens d'amorçage est augmentée car ces derniers réagissent également entre eux par conduction et convection thermiques. De ce fait, le temps d'amorçage de l'élément magnétocalorique 30 est encore réduit et un générateur thermique intégrant un ou plusieurs de ces éléments magnétocaloriques 30 parviendra à un régime établi très rapidement.

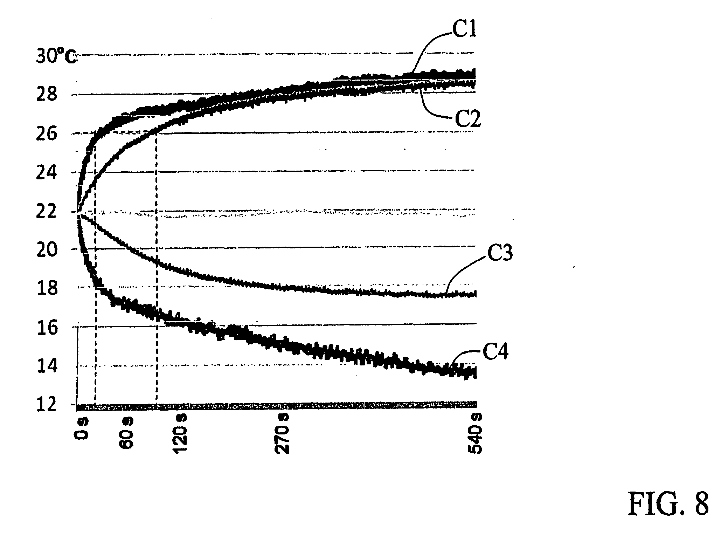

Les courbes de température représentées à la figure 8 décrivent ce phénomène. On remarque que la courbe C2 représentant l'évolution de la température de l'extrémité chaude MC10 de l'élément magnétocalorique 30 en fonction du temps, avant intégration de moyens d'amorçage atteint la température de régime établi plus tard que celle de la courbe C1 relative audit élément magnétocalorique 30 muni de moyens d'amorçage. Il en est de même en ce qui concerne les courbes C3 et C4 représentant l'évolution de la température de l'extrémité froide MC1 dans l'élément magnétocalorique respectivement avant intégration de moyens d'amorçage et le même élément magnétocalorique 30 muni desdits moyens. L'intégration de tels moyens d'amorçage permet donc d'atteindre un régime établi plus rapidement et ce, à partir de températures initiales variées. On remarque notamment que pour atteindre 26°C du côté de l'extrémité chaude 6, cent secondes sont nécessaires sans moyens d'amorçage et que l'intégration de ces derniers réduit cette durée à vingt secondes.

Bien que dans le premier mode de réalisation de l'invention, tous les ensembles MC1-10 formant l'élément magnétocalorique et les moyens d'amorçage soient réalisées par un assemblage de plaques en matériaux magnétocaloriques, une autre configuration est possible, sans pour autant sortir du champ d'application de l'invention.

En outre, les moyens d'amorçage MA1 à MA5, lorsqu'ils sont sous la forme de plaques, peuvent présenter toute largeur, et couvrir au minimum une partie d'un ensemble et au maximum tous les ensembles formant l'élément magnétocalorique.

De plus, dans les exemples illustrés selon le premier mode de réalisation, les différentes plaquettes 5 formant les ensembles MC1 à MC15 sont espacées les unes des autres pour permettre au fluide caloporteur de circuler entre elles afin d'échanger de l'énergie thermique avec ces plaquettes 5. Dans un mode particulier comme celui représenté à la figure 11, il peut être prévu que les moyens d'amorçage MA33, MA34 forment un dispositif d'espacement ou de séparation entre deux plaquettes 5 adjacentes d'un même ensemble MC20, MC21. Dans cette figure 11 l'élément magnétocalorique 90 comporte deux ensembles MC20 et MC21 adjacents de matériaux magnétocaloriques constitués par des plaquettes 5 séparées entre elles par des entretoises formant lesdits moyens d'amorçage MA33 et MA34. La direction de circulation du fluide est représentée par la flèche F.

Dans une telle configuration, les moyens d'amorçage MA33, MA34 permettent à la fois d'assurer l'espacement pour le passage du fluide caloporteur et de réaliser un amorçage plus rapide du gradient de température, c'est-à-dire que d'atteindre un gradient de température fonctionnel entre les extrémités de l'élément magnétocalorique plus rapidement.

### Possibilités d'application industrielle:

Il ressort clairement de cette description que l'invention permet d'atteindre les buts fixés, à savoir proposer un élément magnétocalorique 1, 10, 20, 30, 40, 50, 60, 70, 80, 90 de génération de flux thermique destiné à être intégré dans un générateur thermique et susceptible de produire très rapidement une grande quantité d'énergie thermique ce, indépendamment des conditions de température extérieure.

En outre, toutes les pièces composant cet élément magnétocalorique 1, 10, 20, 30, 40, 50, 60, 70, 80, 90 peuvent être réalisées selon des processus industriels reproductibles.

Un élément magnétocalorique 1, 10, 20, 30, 40, 50, 60, 70, 80, 90 peut trouver une application aussi bien industrielle que domestique dans le domaine du chauffage, de la climatisation, du tempérage, refroidissement ou autres, ce, à des coûts compétitifs et dans un faible encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Elément magnétocalorique (1, 10, 20 ,30, 40, 50, 60, 70, 80, 90) constitué par un alignement d'au moins deux ensembles (MC1-21) adjacents de matériaux magnétocaloriques comportant une température de Curie différente, les matériaux magnétocaloriques au sein d'un même ensemble (MC1-21) présentant la même température de Curie, et lesdits ensembles (MC1-21) adjacents étant disposés selon une température de Curie croissante, **caractérisé en ce que** ledit élément magnétocalorique (1, 10, 20, 30, 40, 50, 60, 70, 80, 90) comporte des moyens d'amorçage (MA1-34) d'un gradient de température entre les deux extrémités opposées chaude (6) et froide (7) dudit élément magnétocalorique (1, 10, 20, 30, 40, 50, 60, 70, 80, 90) et **en ce que** lesdits moyens d'amorçage (MA1-26) sont constitués par des matériaux magnétocaloriques présentant une zone de transition plus importante que celle des matériaux magnétocaloriques formant lesdits ensembles (MC1-19).

2. Elément magnétocalorique, selon la revendication 1, **caractérisé en ce que** les matériaux magnétocaloriques constituant lesdits ensembles (MC1-19) sont à transition de phase de premier ordre et **en ce que** les matériaux magnétocaloriques formant lesdits moyens d'amorçage (MA1-26) sont à transition de phase de second ordre.

3. Elément magnétocalorique, selon l'une quelconque des revendications précédentes, **caractérisé en ce que** chaque ensemble (MC1-15) est constitué par une superposition de plaquettes (5) en matériau magnétocalorique espacées les unes des autres pour autoriser le passage d'un fluide caloporteur à travers ledit ensemble (MC1-15).

4. Elément magnétocalorique, selon la revendication 3, **caractérisé en ce que** les matériaux magnétocaloriques formant les moyens d'amorçage sont sous la forme d'au moins une plaque (MA1-25) intégrée transversalement dans et/ou le long d'au moins un ensemble (MC1-10) en matériau magnétocalorique et dont la zone de transition couvre la température de Curie du ou desdits ensembles (MC1-10).

5. Elément magnétocalorique, selon la revendication 3, **caractérisé en ce qu'**au moins un ensemble (MC11-15) comprend des moyens d'amorçage sous la forme d'au moins deux plaques (MA11-25) en matériau magnétocalorique alignées et intégrées transversalement dans et/ou le long dudit ensemble (MC11-15) et **en ce que** la zone de transition de l'assemblage formé par lesdites plaques (MA11-25) couvre la température de Curie dudit ensemble (MC11-15).

6. Elément magnétocalorique, selon la revendication 3, **caractérisé en ce que** les matériaux magnétocaloriques formant les moyens d'amorçage sont sous la forme d'au moins une plaque (MA27-32) intégrée transversalement dans et/ou le long de deux ensembles (MC11, MC12; MC12, MC13: MC 13, MC 14 ; MC14, MC15) en matériau magnétocalorique et constituée par le même matériau magnétocalorique que celui de l'un desdits deux ensembles (MC 11, MC12; MC12, MC 13 ; MC 13, MC14; MC14, MC15).

7. Elément magnétocalorique, selon la revendication 3, **caractérisé en ce que** les matériaux magnétocaloriques formant les moyens d'amorçage sont sous la forme d'au moins deux plaques (MA1-5) parallèles, intégrée chacune transversalement dans et/ou le long d'au moins deux ensembles (MC1-10) de telle manière que lesdites plaques (MA1-5) sont adjacentes entre elles dans au moins un desdits ensembles (MC1-10) et **en ce que** la zone de transition de chaque plaque (MA1-5) couvre la température de Curie des ensembles (MC1-10) dans lesquels elle est intégrée.

8. Elément magnétocalorique, selon la revendication 1, **caractérisé en ce que** chaque ensemble (MC16-19) est constitué par une pièce poreuse en matériau magnétocalorique.

9. Elément magnétocalorique, selon la revendication 8, **caractérisé en ce que** les matériaux magnétocaloriques formant les moyens d'amorçage (MA26) sont sous la forme d'au moins une barrette intégrée sensiblement transversalement dans au moins un ensemble (MC16-19) en matériau magnétocalorique.

10. Générateur thermique magnétocalorique comportant au moins un élément magnétocalorique, au moins un arrangement magnétique agencé pour soumettre ledit élément magnétocalorique à une variation de champ magnétique et créer alternativement, dans ce dernier, un cycle d'échauffement et un cycle de refroidissement et un fluide caloporteur déplacé de manière alternée à travers ledit élément magnétocalorique dans une direction sensiblement perpendiculairement aux ensemble et en synchronisation avec la variation du champ magnétique, de manière à mettre en place puis à maintenir un gradient de température entre les extrémités opposées chaude et froide dudit élément magnétocalorique, générateur **caractérisé en ce que** ledit élément magnétocalorique est réalisé selon l'une quelconque des revendications précédentes.

## Claims

1. Magnetocaloric element (1, 10, 20 ,30, 40, 50, 60, 70, 80, 90) made of an alignment of at least two adjacent sets (MC1-21) of magnetocaloric materials having a different Curie temperature, the magnetocaloric materials within a same set (MC1-21) having the same Curie temperature, and the sets (MC1-21) being arranged according to an increasing Curie temperature, **characterised in that** said magnetocaloric element (1, 10, 20, 30, 40, 50, 60, 70, 80, 90) comprises means (MA1-34) for initiating a temperature gradient between the two opposite hot (6) and cold (7) ends of said magnetocaloric element (1, 10, 20, 30, 40, 50, 60, 70, 80, 90) and **in that** the initiating means (MA1-26) are made of magnetocaloric materials having a wider transition zone than that of the magnetocaloric materials making up the sets (MC 1-19).

2. Magnetocaloric element according to claim 1, **characterised in that** the magnetocaloric materials making up the sets (MC1-19) have a first-order phase transition and **in that** the magnetocaloric materials making up the initiating means (MA1-26) have a second-order phase transition.

3. Magnetocaloric element according to any of the previous claims, **characterised in that** each set (MC1-15) is made of a superposition of small plates (5) out of magnetocaloric material spaced from each other to allow the heat transfer fluid to pass through said set (MC1-15).

4. Magnetocaloric element according to claim 3, **characterised in that** the magnetocaloric materials making up the initiating means are in the form of at least one plate (MA1-25) integrated transversally in and/or along at least one set (MC1-10) out of magnetocaloric material and whose transition zone covers the Curie temperature of said set(s) (MC1-10).

5. Magnetocaloric element according to claim 3, **characterised in that** at least one set (MC11-15) includes initiating means in the form of at least two plates (MA11-25) out of magnetocaloric material aligned and integrated transversally in and/or along said set (MC11-15) and **in that** the transition zone of the assembly made up by said plates (MA11-25) covers the Curie temperature of said set (MC11-15).

6. Magnetocaloric element according to claim 3, **characterised in that** the magnetocaloric materials making up the initiating means are in the form of at least one plate (MA27-32) integrated transversally in and/or along two sets (MC11, MC12 ; MC12, MC 13 ; MC 13, MC 14 ; MC 14, MC 15) out of magnetocaloric material and made up of the same magnetocaloric material as that of one of said two sets (MC11, MC12 ; MC12, MC13 ; MC13, MC14 ; MC14, MC15).

7. Magnetocaloric element according to claim 3, **characterised in that** the magnetocaloric materials making up the initiating means are in the form of at least two parallel plates (MA1-5), each integrated transversally in and/or along at least two sets (MC1-10), so that said plates (MA1-5) are adjacent among themselves in at least one of said sets (MC1-10) and **in that** the transition zone of each plate (MA1-5) covers the Curie temperature of the sets (MC1-10) in which it is integrated.

8. Magnetocaloric element according to claim 1, **characterised in that** each set (MC16-19) is made up of a porous piece out of magnetocaloric material.

9. Magnetocaloric element according to claim 8, **characterised in that** the magnetocaloric materials making up the initiating means (MA26) are in the form of at least one small bar integrated approximately transversally in at least one set (MC16-19) out of magnetocaloric material.

10. Magnetocaloric heat generator comprising at least one magnetocaloric element, at least one magnetic arrangement arranged to submit said magnetocaloric element to a magnetic field variation and to create alternately in this magnetocaloric element a heating cycle and a cooling cycle, and a heat transfer fluid circulated in an alternating way through said magnetocaloric element in a direction approximately perpendicular to the sets and synchronized with the magnetic field variation, in order to create and then to maintain a temperature gradient between the opposite hot and cold ends of said magnetocaloric element, this generator being **characterized in that** said magnetocaloric element is built in accordance with any of the previous claims.

## Patentansprüche

1. Magnetokalorisches Element (1, 10, 20 ,30, 40, 50, 60, 70, 80, 90) bestehend aus einer Reihe von zumindest zwei anliegenden Gruppen (MC2-21) von magnetokalorischen Materialien mit einer verschiedenen Curie-Temperatur, wobei die magnetokalorischen Materialien innerhalb einer gleichen Gruppe (MC2-21) die selbe Curie-Temperatur aufweisen, und die besagten anliegenden Gruppen (MC1-21) nach einer steigenden Curie-Temperatur angeordnet sind, **dadurch gekennzeichnet, dass** das besagte magnetokalorische Element (1, 10, 20, 30, 40, 50, 60, 70, 80, 90) Mittel (MA1-34) aufweist zum Auslösen eines Temperaturgradienten zwischen den beiden entgegen gesetzten warmen (6) und kalten (7) Enden des besagten magnetokalorischen Elements (1, 10, 20, 30, 40, 50, 60, 70, 80, 90) und dadurch, dass die besagten Mittel zum Auslösen (MA1-26) aus magnetokalorischen Materialien bestehen, die einen weiteren Übergangsbereich aufweisen, als der der magnetokalorischen Materialien, die die besagten Gruppen (MC1-19) bilden.

2. Magnetokalorisches Element nach Anspruch 1, **dadurch gekennzeichnet, dass** die magnetokalorischen Materialien, die die besagten Gruppen (MC1-19) bilden, einen Phasenübergang erster Ordnung aufweisen und dadurch, dass die magnetokalorischen Materialien, die die besagten Mittel zum Auslösen (MA1-26) bilden, einen Phasenübergang zweiter Ordnung aufweisen.

3. Magnetokalorisches Element nach einem beliebigen der vorhergehenden Ansprüche, **dadurch gekennzeichnet, dass** jede Gruppe (MC2-15) aus einer Superposition von Plättchen (5) aus magnetokalorischem Material besteht, die in Abstand voneinander angeordnet sind, um den Durchgang eines Wärmeübertragungsfluids durch die besagte Gruppe (MC1-15) zu ermöglichen.

4. Magnetokalorisches Element nach Anspruch 3, **dadurch gekennzeichnet, dass** die magnetokalorischen Materialien, die die besagten Mittel zum Auslösen bilden, die Form von zumindest einer Platte (MA1-25) aufweisen, die quer in und/oder entlang mindestens einer Gruppe (MC1-10) aus magnetokalorischem Material integriert ist, und dessen Übergangsbereich die Curie-Temperatur der besagten Gruppe(n) (MC1-10) abdeckt.

5. Magnetokalorisches Element nach Anspruch 3, **dadurch gekennzeichnet, dass** zumindest eine Gruppe (MC11-15) Mittel zum Auslösen in der Form von zumindest zwei Platten (MA11-25) aus magnetokalorischem Material auf einer Reihe beträgt, die quer in und/oder entlang der besagten Gruppe (MC11-15) integriert sind, und dadurch, dass der Übergangsbereich des aus den besagten Platten (MA11-25) gebildeten Aufbaus die Curie-Temperatur der besagten Gruppe (MC11-15) abdeckt.

6. Magnetokalorisches Element nach Anspruch 3, **dadurch gekennzeichnet, dass** die magnetokalorischen Materialien, die die Mittel zum Auslösen bilden, die Form von zumindest einer Platte (MA27-32) haben, die quer in und/oder entlang von zwei Gruppen (MC11, MC12; MC12, MC13: MC13, MC14; MC14, MC15) aus magnetokalorischem Material integriert ist und aus dem selben magnetokalorischem Material besteht, als eine der besagten beiden Gruppen (MC 11, MC12; MC12, MC13; MC13, MC14 ; MC14, MC15).

7. Magnetokalorisches Element nach Anspruch 3, **dadurch gekennzeichnet, dass** die magnetokalorischen Materialien, die die Mittel zum Auslösen bilden, die Form von zumindest zwei parallelen Platten (MA1-5) haben, die jeweils quer in und/oder entlang von zumindest zwei Gruppen (MC1-10) so integriert sind, dass die besagten Platten (MA1-5) zumindest in einer der besagten Gruppen (MC1-10) aneinander angrenzen und dadurch, das der Übergangsbereich jeder Platte (MA1-5) die Curie-Temperatur der Gruppen (MC1-10) in denen sie integriert ist abdeckt.

8. Magnetokalorisches Element nach Anspruch 1, **dadurch gekennzeichnet, dass** jede Gruppe (MC16-19) aus einem porösen Teil aus magnetokalorischem Material besteht.

9. Magnetokalorisches Element nach Anspruch 8, **dadurch gekennzeichnet, dass** die magnetokalorischen Materialien, die die Mittel zum Auslösen (MA26) bilden, die Form von zumindest einem merklich quer in zumindest einer Gruppe (MC16-19) aus magnetokalorischem Material integrierten Stab haben.

10. Magnetokalorischer thermischer Generator mit zumindest einem magnetokalorischen Element, zumindest einer magnetischen Anordnung, die ausgelegt ist, um das besagte magnetokalorische Element einer Magnetfeld-Variation auszusetzen und abwechselnd in letzterem einen Heiz-Zyklus und einen Kühl-Zyklus zu erzeugen, und ein Wärmeübertragungsfluid, das abwechselnd in einer der Gruppen merklich rechtwinkligen Richtung und synchron mit der Variation des Magnetfelds durch das besagte magnetokalorische Element hindurch gefördert wird, um einen Temperaturgradienten zwischen den entgegen gesetzten warmen und kalten Enden des besagten magnetokalorischen Elements aufzubauen und aufrecht zu erhalten, **dadurch gekennzeichnete**r Generator, dass das besagte magnetokalorische Element nach einem beliebigen der vorhergehenden Ansprüche hergestellt ist.
